# EUROPEAN PATENT SPECIFICATION

(11) **EP 4 551 910 B1**
(45) Date of publication and mention of the grant of the patent: **07.10.2026**
(21) Application number: 23738680.0
(22) Date of filing: 04.07.2023
(51) Int. Cl.: G01N 29/04, G01M 7/08, G01H 13/00, G01H 17/00, G01N 9/00, G01N 29/12, G01N 29/22, G01N 29/44

(54) **DENSITY ASYMMETRY MEASUREMENT METHOD AND APPARATUS**
DICHTE-ASYMMETRIE-MESSVERFAHREN UND -GERÄT
PROCÉDÉ ET APPAREIL DE MESURE D'ASYMÉTRIE DE DENSITÉ

(30) Priority: 04.07.2022 EP 22182810
(43) Date of publication of application: 14.05.2025
(73) Proprietor: GrindoSonic BV, 3001 Leuven (BE)
(72) Inventor: VAN DEN BOSSCHE, Alex, 3040 Neerijse (BE)
(74) Representative: Oryon NV
(86) International application number: PCT/EP2023/068310
(87) International publication number: WO 2024/008679

(56) References cited:
- WO-A1-2019/020825
- US-A1- 2007 157 698
- US-A1- 2019 234 908

## Description

### Technical field

The present invention concerns a method and an apparatus for measuring density asymmetries of a solid object. Hereto, an excitation pulse is provided to the solid object and a vibrational response is registered and analyzed for deviations from an expected density distribution, in particular deviations from a homogenous density distribution. Hence, the present invention is related to the field of non-destructive testing by means of an impact excitation technique and a vibrational response analysis.

### Background

High-precision manufacturing of solid objects is an important industrial activity. For many applications, it is important that a solid object has the shape and size as intended. However, also important in many applications, is that the object has a homogeneous density distribution or a density distribution as expected.

For example, a gear preferably is symmetric when rotating over an integer multitude of the angle corresponding to 360° divided by the number of teeth of the gear. However, even if the gear's shape is perfectly symmetric, the possibility remains that the density of the gear fluctuates. In such case, the gear may not be balanced properly and may cause problems to e.g. the machinery it is used in. Another example relates to a ring, which preferably is rotationally symmetric both in shape and in density distribution. This applies to a ring for industrial use or decorative use. Further examples concern beams, rods, plungers, etc., each of which may be required to have a specific shape and density distribution for their intended purpose.

US 2007/157698 A1 relates to a system and method for the non-destructive measurement of elastic properties of materials.

Non-destructively measuring the shape and size of a solid object can be seen as standard practice. However, non-destructively measuring the density distribution within a solid object can be very cumbersome and costly.

The present invention aims to overcome this problem and intends to provide a method and apparatus which allows to measure the density distribution of a solid object in view of testing deviations of said density distribution from the intended density distribution. In many cases the intended density distribution is a homogenous density distribution, in which case the present invention provides a method and a apparatus for measuring density inhomogeneities. Such density inhomogeneities can be due to defects, microcracks, local porosities, etc.

One way of non-destructively measuring density variations, and in particular of porosity variations, is by using X-ray tomography, more in particular X-ray micro-computed tomography (CT). X-ray micro-CT has the advantage of recreating a full 3D model of a scanned object, allowing a non-destructive inspection of internal features or defects. However, X-ray micro-CT is an expensive and timeconsuming measuring method. Furthermore, the inventors have found that X-ray micro-CT cannot resolve all types of quality-decreasing structural properties. For instance, X-ray micro-CT does not have a good sensitivity for detecting microcracks. The present invention aims to provide a method wherein one can obtain a quality assessment of an solid object with respect to both porosity and microcracks in a single measurement or at least with a single measurement setup.

The present invention can be applied to all types of solid objects, but is most advantageous when applied to solid objects manufactured through additive manufacturing (AM), also called 3D printing. Such manufacturing process could indeed lead to deviations of the density of the solid object from the intended density distribution, in particular deviations of the density from a homogeneous density distribution, e.g. because of an incomplete sintering or other causes.

The present invention can be applied to all shapes of solid objects, but is preferably applied to a solid object substantially comprising a geometric symmetry.

The present invention aims to overcome the above mentioned and other problems. The present invention hereto provides a method and an apparatus for measuring density variations of a solid object, and in particular for measuring density inhomogeneities, and more in particular for measuring density asymmetries.

### Summary of the invention

The present invention concerns a method according to claim 1 and an apparatus according to claim 11.

The invention is based on the insights of the inventors that:
- a geometrically symmetric solid object may have a density asymmetry, i.e. the density distribution of the solid object deviates from the geometric symmetry of the solid object;
- such density asymmetry results in a shift of vibrational eigenfrequencies for the solid object when these eigenfrequencies are excited along different orientations, even if said orientations are related to one another via the geometric symmetry of the solid object;
- differences in the eigenfrequencies which are measured along different orientations for the same vibrational mode signal density asymmetry, the larger the difference, the higher the asymmetry, i.e. the difference in eigenfrequencies is a measure of the density asymmetry;
- for solid objects which do not comprise a substantial geometric symmetry, similar observations hold, but the measured difference in eigenfrequencies must be compared to a reference value in order to measure density inhomogeneities,
- the method can be performed for objects which are intended to comprise a homogeneous density distribution, but may also be performed for objects which are intended to comprise a density distribution according to a reference density distribution which is not homogeneous, i.e. the present method allows to measure density distribution deviations, i.e. deviations of the density distribution with respect to a reference density distribution which can be homogeneous or inhomogeneous.

The present invention exploits these insights by performing an impact excitation (IE) measurement technique, allowing to obtain a vibrational response to an excitation pulse provided to the solid object. The vibrational response can be analyzed and a set of eigenfrequencies can be derived from the response. By repeating the IE measurement at least once, and preferably multiple times, such as 2, 3, 4, 5, 6, 7, 8, 9, 10 times or more, at different impact positions on the object, multiple sets of eigenfrequencies can be obtained, which can be compared. By selecting the different impact positions such that the orientations of the excited eigenfrequencies are different from one another, the difference in eigenfrequency for each vibrational mode in different orientations is a direct measure of the density distribution.

In a preferred embodiment, the object substantially comprises a geometric symmetry, and different impact positions can be selected substantially in correspondence with the symmetry of the solid object, the difference in eigenfrequency for each vibrational mode when excited by excitation pulse at the different positions is then a direct measure of the density asymmetry. Furthermore, the present invention allows detection of density asymmetries in a solid object without requiring further input on the properties of the solid object. For instance, no reference values need to be provided for the eigenfrequencies in order to measure the asymmetry. Also, there is no need to compare the results of an object with results from a reference object in order to measure the density asymmetry.

Note that the shift in eigenfrequency can be more pronounced for some vibrational modes than for others. Hence, in a preferred embodiment, a vibrational mode is selected in order to optimize the sensitivity of the method and/or apparatus of the present invention.

The IE measurement technique is relatively cheap, easy and fast to perform, making it much easier than X-ray micro-CT, while still offering highly reliable information on density asymmetries.

### Overview of the figures

**Figure 1** shows an impact device according to a preferred embodiment of the present invention.
**Figures 2A-D** illustrate the impact method and impact device according to a preferred embodiment of the present invention.
**Figure 3** illustrates an embodiment of the arm in accordance with a preferred embodiment of the present invention.
**Figure 4 and 5** illustrate angular velocity profiles in accordance with preferred embodiments of the present invention.
**Figure 6** shows results of performing the method according to the present invention, using a system according to the present invention.
**Figure 7** illustrates an apparatus in accordance with the present invention.

### Detailed description of the invention

The present invention concerns a method according to claim 1 and an apparatus according to claim 11.

The method according to the present invention concerns a non-destructive method for measuring a density distribution deviation in a solid object.

The method comprises the steps of:
a) providing a first excitation pulse to the solid object, preferably a mechanical impact;
b) obtaining a first vibrational response of the solid object to the first excitation pulse, and deriving a first eigenfrequency of a vibrational mode in a first orientation from said first vibrational response;
c) providing a second excitation pulse to the solid object, preferably a mechanical impact;
d) obtaining a second vibrational response of the solid object to the second excitation pulse, and deriving a second eigenfrequency of said vibrational mode in a second orientation from said second vibrational response,
whereby the first excitation pulse is provided to the solid object at a first position and the second excitation pulse is provided to the solid object at a second position which is different from the first position such that the first orientation is different from the second orientation, whereby the method further comprising the step of:
e) comparing the first eigenfrequency with the second frequency, thereby obtaining a measure of the density distribution deviation in said solid object.

In a preferred embodiment, the solid object substantially comprises a geometric symmetry and the density distribution deviation substantially is a density asymmetry. A substantial geometric symmetry hereby refers to a transformation of the object which substantially reproduces the shape and size of the object. The most common geometric symmetries are two-dimensional and three-dimensional rotations, mirror symmetry with respect to an axis or a point, and combinations thereof. The geometric symmetry may be a continuous symmetry, a discrete symmetry or a combination thereof. For instance, a ring may comprise a continuous two-dimensional rotational symmetry around a central axis and discrete mirror symmetries with respect to a plane perpendicular to the central axis and to each plane comprising the central axis; a gear may comprise a discrete two-dimensional rotational symmetry and a set of discrete mirror symmetries, the discreteness of the rotational symmetry being caused by the teeth of the gear; cube-shaped and beam-shaped objects may also comprise a set of discrete rotational and mirror symmetries. In an embodiment of the present invention, the solid object may substantially comprise a geometric symmetry. Hereby, the solid object may have a shape which deviates slightly from the perfect geometric symmetry. Such deviation from the perfect geometric symmetry can be accidental and/or intended. For instance, a ring may have a small local thickening around its circumference, which breaks the perfect geometric symmetry, or the ring may have engravings along its circumference. These small deviations may lead to an eigenfrequency difference offset which can be taken into account when the measured eigenfrequencies along different orientations are compared, i.e. in step e or e' of the methods according to the present invention. Such eigenfrequency difference offset can be relatively easy determined by calibration measurements or by computer simulations.

As discussed previously, the present invention involves obtaining eigenfrequencies of the solid object. These eigenfrequencies are frequencies at which the object can resonate naturally. Consequently, if the object is made to vibrate, e.g. by an impact, it continues vibrating longer at its eigenfrequencies than at other frequencies. Furthermore, a solid object may have many eigenfrequencies, each of which can be attributed to a vibrational mode. In a preferred embodiment of the present invention, a vibrational mode may be a longitudinal stretching mode, a bending mode or a torsion mode. The selection of which may preferably be dependent upon the shape of the object, and preferably on geometric symmetry of the object in embodiments wherein the object substantially comprises a geometric symmetry. A vibrational mode may preferably be a base mode or a harmonic mode, such as a first harmonic mode, a second harmonic mode, a third harmonic mode or a harmonic mode of fourth degree or higher. In a particularly preferred embodiment, the vibrational mode is, or is selected to be, a first harmonic mode or a second harmonic mode. The inventors have found that harmonic modes seem to be more sensitive to eigenfrequency differences due to density distribution deviations and/or density asymmetries than base modes. Consequently, a first harmonic mode, a second harmonic mode or a harmonic mode of n'th degree are preferred, wherein n is 3, 4, 5, 6, 7, 8, 9, 10 or even higher.

The eigenfrequency of a vibrational mode is measured and derived a first time by performing steps a and b, and a second time by performing in steps c and d. The difference between the measurements is the point of impact, i.e. the first position and the second position, which ensures excitation of the vibrational mode along different orientations.

A geometric symmetry of the object allows excitation pulses provided at different positions to make the object vibrate essentially in the same manner if the density is homogeneously distributed and if the different position correspond to positions which are substantially transformed into each other by a geometric symmetry transformation.

In a preferred embodiment, the method comprises repeating the steps of
c') providing an i'th excitation pulse to the solid object, preferably a mechanical impact; and
d') obtaining an i'th vibrational response of the solid object to the i'th excitation pulse, and deriving an i'th eigenfrequency of said vibrational mode in an i'th orientation from said i'th vibrational response,

whereby the i'th excitation pulse is provided to the solid object at an i'th position which is different from the first position, the second position and the j'th position such that the i'th orientation is different from the first orientation, the second orientation and the j'th orientation, wherein j < i,
and this for i being at least 3, such as 3, 4, 5, 6, 7, 8, 9, 10 or higher.

The method further preferably comprises the step of:
f) comparing the first eigenfrequency with the second frequency, thereby obtaining a measure of the density distribution deviation in said solid object.

In accordance with the embodiment described above, said method preferably comprises repeating the step of:
e') comparing the i'th frequency with the first eigenfrequency, the second frequency and/or the j'th frequency whereby j < i, thereby obtaining a measure of the density asymmetry in said solid object.

In a preferred embodiment, the solid object substantially comprises a geometric symmetry and the density distribution deviation substantially is a density asymmetry, whereby the first position and the second position are substantially related by the geometric symmetry of the solid object, and whereby step e) comprises taking the difference between the first eigenfrequency and the second eigenfrequency to obtain said measure of the density asymmetry. Preferably hereby, steps c', d' and e' are performed a number n times, wherein n is selected on the basis of the substantial geometric symmetry of the solid object. Also preferably, hereby the i'th position is related by the geometric symmetry of the solid object to the first position, the second position and the j'th position, wherein j < i.

From the above discussion which is focused on the preferred embodiment of a solid object substantially comprising a geometric symmetry, it may seem that the present invention is only related to solid objects having a geometric symmetry. However, the present invention may also be applied to objects having no geometric symmetry. In such cases, the methodology can be applied to many objects of the same type, typically objects which are manufactured in multitude, having the same intended shape and size and using the same manufacturing method. Comparison of the results coming from a plurality of objects then allows to identify which of the objects comprises a density distribution which deviates from the intended density distribution.

Hence, in an embodiment of the present invention, step e) comprises taking the difference between the first eigenfrequency and the second eigenfrequency and comparing said difference to a reference eigenfrequency difference value to obtain said measure of the density distribution deviation and/or step e') comprises taking a set of the differences between the i'th eigenfrequency and the j'th eigenfrequency, wherein j < i, and comparing said differences to reference eigenfrequency difference values to obtain said measure of the density distribution deviation.

The impact excitation technique for characterising solid objects can be known from the following documents:
Document EP3658868A1 discloses an apparatus for analyzing a mechanical vibratory response of a solid material sample, the apparatus comprising: an array of impactors arranged to impart an impact on respective well-defined points on the surface of said solid material sample; a sensor configured to capture said mechanical vibratory response as a time-varying signal, subsequent to an impact of said at least one impactor; and processing means configured to analyze said time-varying signal to determine the frequencies and decay constants of sinusoids making up said time-varying signal. The invention also pertains to a corresponding method of characterizing a solid material sample.

Document WO2020254698A1 discloses a method for acoustically measuring material properties of a test piece at high temperatures, comprising the steps of: a. heating the test piece to within a testing temperature range; b. performing a background measurement within said testing temperature range by capturing a vibrational signal from the test piece within a calibration period, thereby obtaining a noise signal; c. performing an acoustic measurement on said test piece within said testing temperature range and within a testing period by: c1. Imparting a vibrational excitation onto the test piece; c2. Capturing a vibrational signal of the test piece within the testing period, thereby obtaining a vibrational response signal to said vibrational excitation, and d. obtaining the material properties of the test piece by analysing the vibrational response signal, thereby taking into account the noise signal. An example not belonging to the claimed invention concerns a system for acoustically measuring material properties of a test piece at high temperatures.

Both prior art documents in name of the current applicant are concerned with methods and apparatus for performing impact excitation (IE) measurements.

The IE technique basically consists of providing an excitation pulse to a solid object and obtaining and analysing the vibrational response signal. This signal is also referred to as an acoustic response signal. The response signal can be captured via a number of ways, including by using a microphone, a piezoelectric displacement sensor and/or a laser interferometer.

The solid object can basically be any type of solid object, including, but not limited to:
- metal solid objects comprising or made of a metal or alloy, preferably wherein the metal may comprise iron, aluminum, zinc, cupper, steel, etc.
- plastics, such as polymer materials
- 3D-printing materials, preferably:
   - metals such as titanium, stainless steel,
   - ceramics such aluminum oxide, or
   - polymers such as polyetheretherketone (PEEK) or Polyetherimide (such as ULTEM^{™}),
- composites, such as composite of plastics and metal.

Most preferably, the solid object is a 3D printed solid object and/or the method of the present invention comprises the step of 3D printing the solid object.

Apparatuses for measuring eigenfrequencies are commercially available, such as the Grindosonic^{®} Mk7, SA, HT and IL apparatuses.

The present invention also concerns an impact excitation (IE) measurement apparatus for measuring a density distribution deviation in a solid object, comprising:
- an object holder for holding the solid object in place during the IE measurement;
- an impact device for providing an excitation pulse to a solid object, preferably a mechanical impact device for providing a mechanical impact to the solid object;
- a sensor for obtaining a vibrational response of the solid object to the excitation pulse;
- processing means configured for:
   - deriving an eigenfrequency of a selected vibrational mode from a vibrational response obtained by the sensor,
whereby:
i) the impact device is configured for providing a first excitation pulse to the solid object, preferably a mechanical impact;
ii) the sensor is configured for obtaining a first vibrational response of the solid object to the first excitation pulse, and the processing means is configured for deriving a first eigenfrequency of a vibrational mode in a first orientation from said vibrational response;
iii) the impact device is configured for providing a second excitation pulse to the solid object, preferably a mechanical impact;
iv) the sensor is configured for obtaining a second vibrational response of the solid object to the second excitation pulse, and the processing means is configured for deriving a second eigenfrequency of said vibrational mode in a second orientation from said second vibrational response,

whereby the object holder is configured to rotate and/or displace the object relative to the impact device and/or the impact device is configured to rotate and/or displace relative to the object holder in between steps b and c, such that the first excitation pulse is provided to the solid object at a first position and the second excitation pulse is provided to the solid object at a second position which is different from the first position such that second orientation is different from the first orientation, and
whereby the processing means is further configured for comparing the first eigenfrequency with the second frequency, thereby obtaining a measure of the density asymmetry in said solid object.

In embodiments wherein the solid object substantially comprises a geometric symmetry, the first position and the second position are preferably related by the geometric symmetry of the solid object. Note that it should be clear that the first position and the second position are related by the geometric symmetry of the solid object if the first position is substantially transformed into the second position if the object is transformed in accordance with its geometric symmetry.

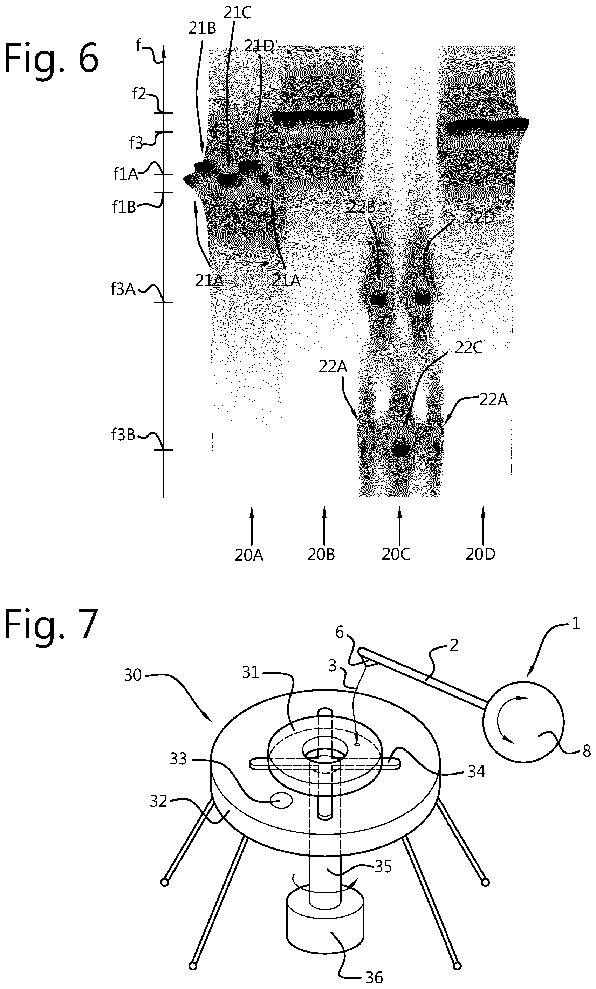

The results of performing the method according to the present invention, using a system according to the present invention, are illustrated in fig. 6. Hereby, four rings were tested using the method of the present invention. The results are shown in the four columns (20A, 20B, 20C, 20D) of fig. 6. In each column, the vibrational responses to four mechanical impacts at four different positions along the ring are shown. The different positions correspond to positions on the ring which are rotated in steps of 45°. The frequency is shown on the vertical axis (f) in the frequency interval of the second harmonic to the bending mode of the rings.

The results of the second sample (20B) and the fourth sample (20D) show a continuous band at frequencies f2 and f4 respectively, indicating that the frequency spectrum is essentially independent from the position of the impact, and thus indicating that the second and fourth sample rings have a homogeneous density distribution. This is different for the first sample ring (20A) and especially for the third sample ring (20C). The first sample ring shows that the four impacts lead to two clearly different vibrational responses having eigenfrequencies at f1A and f1B respectively. The first impact (21A) and the third impact (21C) lead to a peak in the vibrational response at eigenfrequency f1B and the second impact (21B) and the fourth impact (21D) lead to a peak in the vibrational response at eigenfrequency f1A. Note that the results for the first impact are shown both on the left side and on the right side, illustrating the rotational geometric symmetry of the rings. The difference between the two eigenfrequencies f1A and f1B is clearly noticeable, but is small, indicating that the density asymmetry of sample 20A is small, yet significant. For the third sample (20C), a much larger difference is noticeable between two eigenfrequency peaks f3A and f3B. Also here, the first impact (22A) and the third impact (22C) lead to a vibrational spectrum with a peak eigenfrequency f3B, while the second impact (22B) and fourth impact (22D) lead to a vibrational spectrum with a peak eigenfrequency f3A. The difference between f3A and f3B is large, indicating a large density asymmetry.

Note also that for the first and third sample, the eigenfrequencies are lower than the eigenfrequency for the second and fourth sample, which is consistent with previous results which indicate that solid objects with high porosity, which tend to have a higher degree of defects, have lower eigenfrequencies than well-manufactured, low-porosity samples such as the second and fourth samples.

The results obtained by the present invention correspond to the results obtained with X-ray micro-CT, but were obtained in a much simpler procedure which is much faster and cheaper than X-ray micro-CT. Indeed, the present method and system allow to obtain results within a matter of seconds for each sample, while X-ray micro-CT requires minutes or even more.

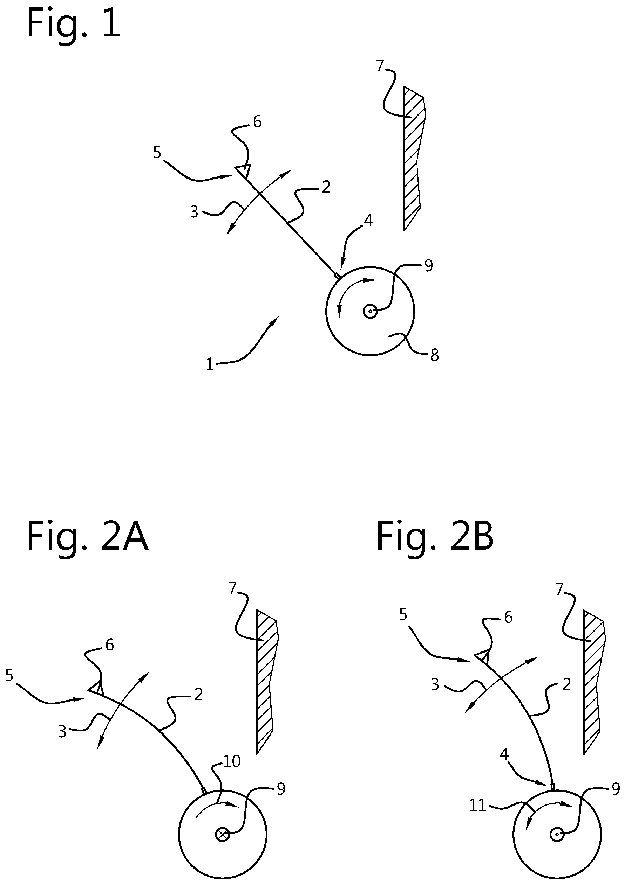

Figure 7 shows an IE measurement apparatus (30) in accordance to the present invention, as applied for measuring a density asymmetry in a ring (31) which substantially comprises a geometric symmetry, in this case a rotational symmetry. The apparatus (30) comprises an object holder (34) for holding the solid object in place during the IE measurement. The object holder preferably comprises a soft bedding to allow the solid object, i.c. the ring, to vibrate essentially freely. The apparatus also comprises an impact device (1) for providing an excitation pulse to a solid object. In the shown figure, the impact device according to a preferred embodiment of the present invention is shown, which essentially corresponds to the impact device shown in figs. 1, 2A-2D and 3, which are discussed later on in this text, and for which the same reference numbers are used. The shown apparatus also comprises a table (32) into which a sensor (33) is positioned which is configured for obtaining a vibrational response of the solid object to an excitation pulse. The processing means of the apparatus are not shown, but can be functionally connected to the sensor, wired or wireless, to receive the vibrational response of the solid object to an excitation pulse. The processing means is then configured for deriving an eigenfrequency of a selected vibrational mode from a vibrational response obtained by the sensor. Further, the impact device (1) is configured for providing (3) a first excitation pulse to the solid object (31), in this case a mechanical impact with a tip (6) on a bendable arm (2). Also, the sensor is configured for obtaining a first vibrational response of the solid object to the first excitation pulse, and the processing means is configured for deriving a first eigenfrequency of a vibrational mode in a first orientation from said vibrational response.

In the illustrated figure, the object holder (34) is configured to rotate the object (31) relative to the impact device (1). In the shown embodiment, the object holder (34) is connected to a rotation axis (35) through the table (32), and the rotation axis (35) can be rotated by an actuator (36), thus allowing the object holder and the object to rotate as desired.

The impact device (1) is further configured for providing a second excitation pulse to the solid object and the sensor is configured for obtaining a second vibrational response of the solid object to the second excitation pulse, and the processing means is configured for deriving a second eigenfrequency of said vibrational mode from said second vibrational response, similar to what is illustrated in fig. 6.

Preferably, the excitation pulse provided to the solid object is as clean as possible to reduce noise signals. In principle, one would like to impart an impulse excitation to the solid object using an impact device which does not make any noise of its own. An impact device typically comprises an impactor which mechanically imparts the excitation pulse to the solid object, and an impactor actuator which provides the kinetical energy to the impactor for imparting the excitation pulse. In prior art, use is made of a ballistic impactor: such a ballistic impactor is provided with a momentum by the impactor actuator after which the impactor follows at least for a short period a ballistic trajectory before impacting on the solid object. After impact, the ballistic impactor again may follow a ballistic trajectory before being recaptured. Using a ballistic impactor has the advantage of allowing an impact which is essentially an impulse impact, i.e. a very short contact period wherein kinetic energy of the impactor is transferred mechanically to the solid object. In practice, noise may arise due to:
- multiple impact: the impactor contacts the solid object two or more times, for instance because the inertia of the impactor allows the solid object surface to vibrate faster than the impactor withdraws from the solid object. For a ballistic impactor, this also means that the impact if preferably provided from below the solid object such that the impactor does not bounce twice or more against the solid object.
- the impactor may make noise when being actuated, typically due to friction between the impactor and the impactor actuator. For a ballistic impactor, the impactor actuator may comprise a barrel or a guide to ensure that the ballistic impactor is provided with a velocity in the correct direction. Friction with the barrel or guide may cause noise.
- the impactor may make noise after impact, e.g. by touching other parts of the apparatus or when being recaptured in the case of a ballistic impactor.

In the prior art, a ballistic impactor was disclosed as a preferential impactor, allowing an impulse impact. However, the inventors have found that a ballistic impactor may not always be the best solution. In particular, a ballistic impactor and the impactor actuator may not always be easily adapted to be used with different types of solid objects. Furthermore, the ballistic impactor is best used from below to reduce the chance of multiple impacts, which thus may prohibit impacting the solid object from different sides and/or directions. Note that this may be required if one wants to excite or enhance different vibrational nodes in the solid object, or excite or enhance vibrational nodes at different positions as in the present invention in order to measure density asymmetries.

The present invention therefor also aims to provide an impact device which:
- is easily adaptable for providing an impulse impact to a solid object of any type of material, geometry, size, etc.,
- can be easily positioned or repositioned to impart an impact to the solid object on a different position and/or along a different direction,
- reduces noise, in particular by basically eliminating the chance of multiple impact and by reducing noise due to friction or recapturing of the impactor.

Thereto, the present invention concerns an improved impact device for performing IE measurements on a solid object as well as a method for operating the impact device. The impact device is preferably used in an impulse excitation measurement apparatus and the present invention therefore also concerns an IE measurement apparatus comprising the impact device.

In a preferred embodiment, the impact device for imparting an impulse impact to a solid object during an impact excitation measurement comprises:
- an elongated elastic bendable arm (2) which is elastically deformable around a bending direction (3), the bendable arm comprising a proximal longitudinal end (4) and a distal longitudinal end (5);
- a hammer tip (6) for mechanically providing an impact to the solid object (7), the hammer tip attached to the distal end (5) of the arm, and
- a programmable actuator (8) attached to the proximal longitudinal end (4) of the arm (2),
whereby the actuator (8) is programmed to provide an angular velocity to the proximal longitudinal end (4) of the arm by rotating said proximal longitudinal end (4) around an actuator axis (9) which is essentially parallel to the bending direction (3) of the arm. Preferably the angular velocity follows a predefined angular velocity profile, whereby said angular velocity profile is configured to provide an impulse impact to the solid object.

The system of the present invention may preferably comprise an impact device kit for mounting an impact device as specified here above, the kit comprising:
- a set of elongated elastic bendable arms, each of which is elastically deformable around a bending direction, the bendable arm comprising a proximal longitudinal end and a distal longitudinal end;
- a set of hammer tips for mechanically providing an impact to the solid object, each of the hammer tips attachable, and preferably attached to, to the distal end of an arm of the set of elongated elastic bendable arms, and
- a programmable actuator attachable to the proximal longitudinal end of each of the arms in a replaceable manner,
whereby the actuator is preferably programmed to provide an angular velocity to the proximal longitudinal end of an operational arm when the actuator is attached to the proximal longitudinal end of said operational arm, by rotating said proximal longitudinal end around an actuator axis which is essentially parallel to the bending direction of the operational arm, the angular velocity preferably following a predefined angular velocity profile whereby said angular velocity profile is configured to provide an impulse impact to the solid object.

In a preferred embodiment, the first excitation pulse and/or the second excitation pulse is provided using an impacting method for imparting an impulse impact to a solid object during an impact excitation measurement using an impact device comprising:
- an elongated elastic bendable arm which is elastically deformable around a bending direction, the bendable arm comprising a proximal longitudinal end and a distal longitudinal end;
- a hammer tip for mechanically providing an excitation pulse to the solid object, the hammer tip attached to the distal end of the arm, and
whereby the preferred impacting method comprises the step of providing an angular velocity to the proximal longitudinal end of the arm by rotating said proximal longitudinal end around an actuator axis which is essentially parallel to the bending direction of the arm. Preferably, the angular velocity follows a predefined angular velocity profile whereby said angular velocity profile is configured to provide an impulse impact to the solid object.

The term "impulse impact" herein refers to a single elastic bounce being provided to the solid object wherein energy is transferred during a short contact period between the hammer tip and the solid object.

As a result of the angular velocity profile, the hammer tip follows a hammer tip trajectory which is configured such that the hammer tip provides the impulse impact to the solid object. Preferably, the hammer tip trajectory starts at a positional offset with respect to the solid object. The hammer tip trajectory is thus dependent, and preferably solely dependent, on said positional offset, the angular velocity profile and the bending characteristics of the bendable arm.

Note that in figures 1 and 2A-D, the bending direction and the actuator axis are shown perpendicular to the page. Note also that the bending direction refers to the direction around which the arm can be bent.

The flexible arm preferably comprises a strip-like shape, having a length L along a longitudinal direction, a width W and a thickness T, whereby L > W > T. The tip (6) being attached to the distal end (5) of the arm (2). Preferably the arm and hammer tip are monolithic. Preferably the arm and/or hammer tip comprise or are made of a plastic, a metal, an alloy, or a combination thereof. Most preferably the arm and hammer tip are monolithic and made of a plastic. The shape of the arm and the material properties of the arm are preferably selected to ensure the bendability of the arm around a bending direction perpendicular to the longitudinal direction, more preferably the width direction and most preferably the shape of the arm and the material properties of the arm are selected to ensure the bendability of the arm around only the width direction, i.e. the arm thus bends only around the width direction during the execution of the angular velocity profile.

In a preferred embodiment, the actuator comprises an electrical motor, more preferably a rotary electrical motor. The electrical motor preferably comprises a rotor which is attached to the proximal end of the bendable arm such that the angular velocity profile of the proximal end of the bendable arm can be determined by the rotor of the electrical motor.

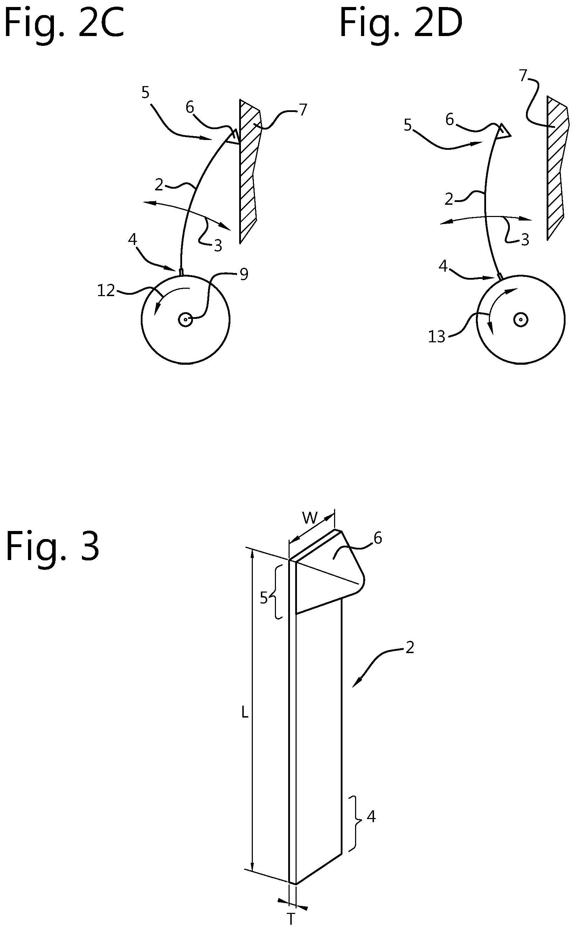

In a preferred embodiment, the angular velocity profile comprises a turning point at which the angular velocity provided to the distal longitudinal end of the arm changes sign, said turning point being earlier than the impact to the solid object. This is particularly preferred to ensure that an impulse impact is provided to the solid object by a whiplash-like movement of the hammer tip. The working hereof is illustrated in figures 1 and 2A-D. In fig. 1, the situation at the start of the method is shown, wherein the flexible arm (2) is basically at rest and straight or only slightly bent (e.g. because of the flexible arm's and the hammer tip's own weight). The actuator then starts executing the angular velocity profile. In fig. 2A, the angular velocity (10) is such that the proximal end of the arm is rotated towards the solid object (7). Due to the inertia of the arm and the hammer tip, the bendable arm bends around the bending direction (3), thereby curving the flexible arm. The angular velocity profile then comprises a turning point wherein the angular velocity (11) imposed on the proximal end (4) of the flexible arm is essentially zero. At the turning point (see fig. 2B), the actuator stops rotating the longitudinal end (4) of the arm (2). However, due to the curving of the arm and the elasticity thereof, the hammer tip remains moving towards the solid object. At the moment of impact to the solid object (see fig. 2C), the actuator is already imposing an angular velocity (12) to the proximal end (4) of the arm away from the solid object, ensuring that after impact, the hammer tip does not impact multiple times on the solid object. This is shown in fig. 2D, wherein the actuator has stopped (13) rotating the proximal end of the arm. Hereby, the hammer tip is moving away from the solid object and is allowed to come back to rest in accordance with the situation in fig. 1, ready to start again for the follow-up measurement.

Preferably, the programmable actuator comprises a programmable computing unit, more preferably an Arduino computing unit or a raspberry pi computing unit. The programmable computing unit can be configured to control an electrical motor, preferably a rotary electrical motor, and can be programmed to steer the electrical motor to essentially follow the angular velocity profile.

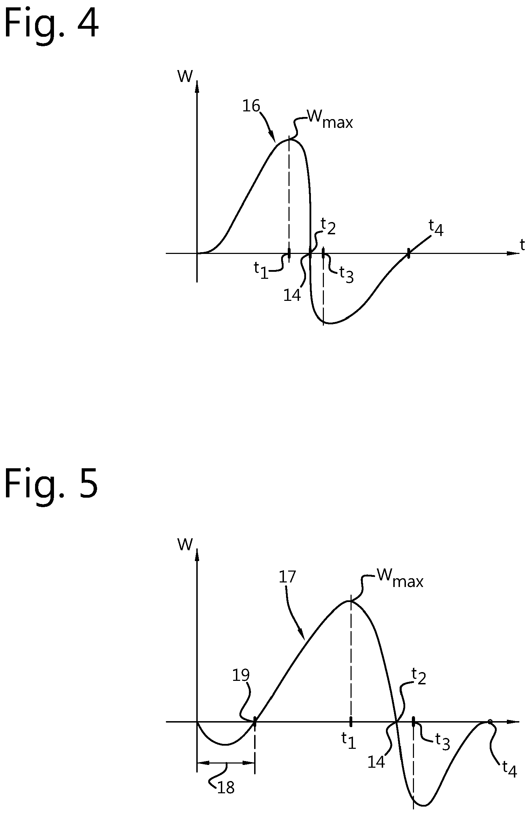

Fig. 4 illustrates an angular velocity profile (16) in accordance with the present invention. The angular velocity profile preferably starts from rest (ω=0 at t=0) and continuously increases up to a maximum angular velocity (ωₘₐₓ) at a time t₁. Note that in the figure, a positive angular velocity indicates rotation of the longitudinal proximal end of the arm towards the solid object, and a negative angular velocity indicates rotation of the longitudinal proximal end of the arm away from the solid object. The angular velocity profile comprises a turning point (14) at time t₂. At a moment t₃, which is later than t₂, the hammer tip impacts upon the solid object with a single elastic bounce. At this moment t₃,the angular velocity is negative, indicating a rotation away from the solid object of the proximal end of the arm. At moment t₄, the actuator comes back to rest (ω=0).

Note that the turning point (14) in the angular velocity profile refers to the moment where the angular velocity changes sign, in particular from positive to negative, i.e. from turning towards the solid object to turning away from the solid object.

Fig. 5 illustrates another angular velocity profile (17) in accordance with the present invention. The angular velocity profile preferably starts from rest (ω=0 at t=0). Contrary to the embodiment illustrated in fig. 4, the angular velocity is negative during a first period (18), which ends at a second turning point (19), the second turning point (19) referring to the point where the angular velocity changes sign from negative to positive, i.e. from turning away from the solid object to turning towards the solid object. After the first period (18), the angular velocity basically follows a similar profile as illustrated in fig. 4, i.e. the angular velocity continuously increases up to a maximum angular velocity (ωₘₐₓ) at a time t₁. The angular velocity profile comprises a turning point (14) at time t₂. At a moment t₃, which is later than t₂, the hammer tip impacts upon the solid object with a single elastic bounce. At this moment t₃,the angular velocity is negative, indicating a rotation away from the solid object of the proximal end of the arm. At moment t₄, the actuator comes back to rest (ω=0).

Preferably the arm is attached to the actuator in a replaceable manner, allowing the arm and/or hammer tip to be easily replaced, e.g. in case of degradation of the tip or in the case another type of arm and/or hammer tip is required for performing the IE measurement. For instance, the arm and/or tip may be exchanged for another arm and/or tip which have different elastic properties, in particular other bendability properties. Another reason to replace the arm and/or hammer tip is when a solid object needs to be impacted upon by another type of hammer tip, for instance when a harder or softer tip is required, or a tip of a different material (e.g. metal instead of plastic) is required for optimal IE measurements for a specific solid object. In this respect it may be noted that for a metal solid object, one may want to use a hard hammer tip, whereas for a solid object made from a 3D printing material, a plastic hammer tip may be preferred. Hence, the present invention may be used for testing different solid objects. Hereto, in an embodiment, the present invention preferably comprises an impact device kit as discussed previously.

In an embodiment, the apparatus preferably comprises one or more control units for controlling the actuator of the impact device and/or the sensor.

Herein, the sensor may preferably comprise a microphone, a piezoelectric displacement sensor and/or a laser interferometer to capture the vibrational response. The sensor may also preferably comprise a processing unit and/or a memory unit for recording and/or analysing the vibrational response.

## Claims

1. A non-destructive method for measuring a density distribution deviation in a solid object , comprising the steps of:
a) providing a first excitation pulse to the solid object, preferably a mechanical impact;
b) obtaining a first vibrational response of the solid object to the first excitation pulse, and deriving a first eigenfrequency of a vibrational mode in a first orientation from said first vibrational response;
c) providing a second excitation pulse to the solid object, preferably a mechanical impact;
d) obtaining a second vibrational response of the solid object to the second excitation pulse, and deriving a second eigenfrequency of said vibrational mode in a second orientation from said second vibrational response,
whereby the first excitation pulse is provided to the solid object at a first position and the second excitation pulse is provided to the solid object at a second position which is different from the first position such that the first orientation is different from the second orientation, and
whereby the method further comprises the step of:
e) comparing the first eigenfrequency with the second eigenfrequency, thereby obtaining a measure of the density distribution deviation in said solid object.

2. A method according to claim 1, comprising repeating the steps of
c') providing an i'th excitation pulse to the solid object, preferably a mechanical impact; and
d') obtaining an i'th vibrational response of the solid object to the i'th excitation pulse, and deriving an i'th eigenfrequency of said vibrational mode in an i'th orientation from said i'th vibrational response,
whereby the i'th excitation pulse is provided to the solid object at an i'th position which is different from the first position, the second position and the j'th position such that the i'th orientation is different from the first orientation, the second orientation and the j'th orientation, wherein j < i,, whereby i is at least 3, such as 3, 4, 5, 6, 7, 8, 9, 10 or higher,
the method further comprising repeating the step of:
e') comparing the i'th frequency with the first eigenfrequency, the second eigenfrequency and/or the j'th frequency whereby j < i, thereby obtaining a measure of the density distribution deviation in said solid object.

3. A method according to any of the claims 1 or 2, whereby the solid object substantially comprises a geometric symmetry and whereby the density distribution deviation substantially is a density asymmetry,
whereby the first position and the second position are substantially related by the geometric symmetry of the solid object, and
whereby step e) comprises taking the difference between the first eigenfrequency and the second eigenfrequency to obtain said measure of the density asymmetry.

4. A method according to claim 3, wherein steps c', d' and e' are performed a number n times, wherein n is selected on the basis of the substantial geometric symmetry of the solid object.

5. A method according to any of the claims 3 or 4, when dependent on claim 2, whereby the i'th position is related by the geometric symmetry of the solid object to the first position, the second position and the j'th position, wherein j < i.

6. A method according to any of the claims 1 to 5, whereby step e) comprises taking the difference between the first eigenfrequency and the second eigenfrequency and comparing said difference to a reference eigenfrequency difference value to obtain said measure of the density distribution deviation or a method according to claim 2, whereby step e') comprises taking a set of the differences between the i'th eigenfrequency and the j'th eigenfrequency, wherein j < i, and comparing said differences to reference eigenfrequency difference values to obtain said measure of the density distribution deviation.

7. A method according to any of the preceding claims, wherein the vibrational mode is a longitudinal stretching mode, a bending mode or a torsion mode.

8. A method according to any of the preceding claims, wherein the vibrational mode is a first harmonic mode or a second harmonic mode.

9. A method according to any of the preceding claims, wherein the solid object comprises any or any combination of the following:
- a metal or alloy, preferably wherein the metal may comprise iron, aluminum, zinc, cupper, steel, etc.
- a plastic, such as a polymer material
- a 3D-printing material, preferably:
• a metal such as titanium or stainless steel,
• a ceramic such as aluminum oxide, or
• a polymer such as polyetheretherketone, i.e. PEEK, or Polyetherimide such as ULTEM^{™}
- a composite material, such as a composite of plastics and metal.

10. A method according to any of the preceding claims, wherein the solid object is a 3D printed solid object and/or whereby the method comprises the step of 3D printing the solid object.

11. An impact excitation, i.e. IE, measurement apparatus for measuring a density distribution deviation in a solid object, comprising:
- an object holder for holding the solid object in place during the IE measurement;
- an impact device for providing an excitation pulse to a solid object, preferably a mechanical impact device for providing a mechanical impact to the solid object;
- a sensor for obtaining a vibrational response of the solid object to the excitation pulse;
- processing means configured for:
• deriving an eigenfrequency of a selected vibrational mode from a vibrational response obtained by the sensor,
whereby:
i) the impact device is configured for providing a first excitation pulse to the solid object, preferably a mechanical impact;
ii) the sensor is configured for obtaining a first vibrational response of the solid object to the first excitation pulse, and the processing means is configured for deriving a first eigenfrequency of a vibrational mode in a first orientation from said vibrational response;
iii) the impact device is configured for providing a second excitation pulse to the solid object, preferably a mechanical impact;
iv) the sensor is configured for obtaining a second vibrational response of the solid object to the second excitation pulse, and the processing means is configured for deriving a second eigenfrequency of said vibrational mode in a second orientation from said second vibrational response,
whereby the object holder is configured to rotate and/or displace the object relative to the impact device and/or the impact device is configured to rotate and/or displace relative to the object holder in between steps b and c, such that the first excitation pulse is provided to the solid object at a first position and the second excitation pulse is provided to the solid object at a second position which is different from the first position such that the first orientation is different from the second orientation, and
whereby the processing means is further configured for comparing the first eigenfrequency with the second eigenfrequency, thereby obtaining a measure of the density distribution deviation in said solid object.

12. An apparatus according to claim 11, wherein the impact device for imparting an impulse impact to a solid object during an impact excitation measurement comprises:
- an elongated elastic bendable arm which is elastically deformable around a bending direction, the bendable arm comprising a proximal longitudinal end and a distal longitudinal end;
- a hammer tip for mechanically providing an excitation pulse to the solid object, the hammer tip attached to the distal end of the arm, and
- a programmable actuator attached to the proximal longitudinal end of the arm,
whereby the actuator is programmed to provide an angular velocity to the proximal longitudinal end of the arm by rotating said proximal longitudinal end around an actuator axis which is essentially parallel to the bending direction of the arm.

13. An apparatus according to claim 12, wherein the angular velocity follows a predefined angular velocity profile, whereby said angular velocity profile is configured to provide an impulse impact to the solid object.

14. An apparatus according to any of claims 11 to 13, wherein the sensor comprises a microphone, a piezoelectric displacement sensor and/or a laser interferometer to capture the vibrational response.

15. An apparatus according to any of claims 11 to 14, wherein the sensor comprises a processing unit and/or a memory unit for recording and/or analysing the vibrational response.

## Patentansprüche

1. Zerstörungsfreies Verfahren zum Messen einer Dichterverteilungsabweichung in einem festen Gegenstand, das die folgenden Schritte umfasst:
a) Bereitstellen eines ersten Erregungsimpulses für den festen Gegenstand, vorzugsweise eines mechanischen Stoßes,
b) Erhalten einer ersten Schwingungsreaktion des festen Gegenstandes auf den ersten Erregungsimpuls und Ableiten einer ersten Eigenfrequenz eines Schwingungsmodus in einer ersten Ausrichtung aus der ersten Schwingungsreaktion,
c) Bereitstellen eines zweiten Erregungsimpulses für den festen Gegenstand, vorzugsweise eines mechanischen Stoßes,
d) Erhalten einer zweiten Schwingungsreaktion des festen Gegenstandes auf den zweiten Erregungsimpuls und Ableiten einer zweiten Eigenfrequenz des Schwingungsmodus in einer zweiten Ausrichtung aus der zweiten Schwingungsreaktion,
wobei der erste Erregungsimpuls für den festen Gegenstand bei einer ersten Position bereitgestellt wird und der zweite Erregungsimpuls für den festen Gegenstand bei einer zweiten Position, die sich von der ersten Position unterscheidet, derart bereitgestellt wird, dass sich die erste Ausrichtung von der zweiten Ausrichtung unterscheidet, und
wobei das Verfahren ferner den folgenden Schritt umfasst:
e) Vergleichen der ersten Eigenfrequenz mit der zweiten Eigenfrequenz, wodurch ein Maß der Dichterverteilungsabweichung in dem festen Gegenstand erhalten wird.

2. Verfahren nach Anspruch 1, welches das Wiederholen der folgenden Schritte umfasst:
c') Bereitstellen eines i-ten Erregungsimpulses für den festen Gegenstand, vorzugsweise eines mechanischen Stoßes, und
d') Erhalten einer i-ten Schwingungsreaktion des festen Gegenstandes auf den i-ten Erregungsimpuls und Ableiten einer i-ten Eigenfrequenz des Schwingungsmodus in einer i-ten Ausrichtung aus der i-ten Schwingungsreaktion,
wobei der i-te Erregungsimpuls für den festen Gegenstand bei einer i-ten Position, die sich von der ersten Position, der zweiten Position und der j-ten Position unterscheidet, derart bereitgestellt wird, dass sich die i-te Ausrichtung von der ersten Ausrichtung, der zweiten Ausrichtung und der j-ten Ausrichtung unterscheidet, wobei j < i, wobei i mindestens 3, wie beispielsweise 3, 4, 5, 6, 7, 8, 9, 10 oder mehr, beträgt,
wobei das Verfahren ferner das Wiederholen des folgenden Schrittes umfasst:
e') Vergleichen der i-ten Eigenfrequenz mit der ersten Eigenfrequenz, der zweiten Eigenfrequenz und/oder der j-ten Eigenfrequenz, wobei j < i, wodurch ein Maß der Dichterverteilungsabweichung in dem festen Gegenstand erhalten wird.

3. Verfahren nach einem der Ansprüche 1 oder 2, wobei der feste Gegenstand im Wesentlichen eine geometrische Symmetrie umfasst und wobei die Dichteverteilungsabweichung im Wesentlichen eine Dichteasymmetrie ist,
wobei die erste Position und die zweite Position im Wesentlichen durch die geometrische Symmetrie des festen Gegenstandes verbunden sind und
wobei der Schritt e) das Nehmen der Differenz zwischen der ersten Eigenfrequenz und der zweiten Eigenfrequenz umfasst, um das Maß der Dichteasymmetrie zu erhalten.

4. Verfahren nach Anspruch 3, wobei die Schritte c', d' und e' eine Anzahl n von Malen durchgeführt werden, wobei n auf der Grundlage der wesentlichen geometrischen Symmetrie des festen Gegenstandes ausgewählt wird.

5. Verfahren nach einem der Ansprüche 3 oder 4, wenn abhängig von Anspruch 2, wobei die i-te Position durch die geometrische Symmetrie des festen Gegenstandes mit der ersten Position, der zweiten Position und der j-ten Position verbunden ist, wobei j < i.

6. Verfahren nach einem der Ansprüche 1 bis 5, wobei der Schritt e) das Nehmen der Differenz zwischen der ersten Eigenfrequenz und der zweiten Eigenfrequenz und das Vergleichen der Differenz mit einem Referenz-Eigenfrequenzdifferenzwert umfasst, um das Maß der Dichteverteilungsabweichung zu erhalten, oder Verfahren nach Anspruch 2, wobei der Schritt e') das Nehmen eines Satzes der Differenzen zwischen der i-ten Eigenfrequenz und der j-ten Eigenfrequenz, wobei j < i, und das Vergleichen der Differenzen mit Referenz-Eigenfrequenzdifferenzwerten umfasst, um das Maß der Dichteverteilungsabweichung zu erhalten.

7. Verfahren nach einem der vorhergehenden Ansprüche, wobei der Schwingungsmodus ein Längsdehnungsmodus, ein Biegungsmodus oder ein Verdrehungsmodus ist.

8. Verfahren nach einem der vorhergehenden Ansprüche, wobei der Schwingungsmodus ein erster Oberschwingungsmodus oder ein zweiter Oberschwingungsmodus ist.

9. Verfahren nach einem der vorhergehenden Ansprüche, wobei der feste Gegenstand ein beliebiges oder eine beliebige Kombination des Folgenden umfasst:
- ein Metall oder eine Legierung, vorzugsweise, wobei das Metall Eisen, Aluminium, Zink, Kupfer, Stahl usw. umfassen kann,
- einen Kunststoff, wie beispielsweise ein Polymermaterial,
- ein 3-D-Druckmaterial, vorzugsweise:
• ein Metall, wie beispielsweise Titan oder rostfreien Stahl,
• eine Keramik, wie beispielsweise Aluminiumoxid, oder
• ein Polymer, wie beispielsweise Polyetheretherketon, d. h., PEEK, oder Polyetherimid, wie beispielsweise ULTEM^{™},
- ein Verbundwerkstoffmaterial, wie beispielsweise einen Verbundwerkstoff aus Kunststoffen und Metall.

10. Verfahren nach einem der vorhergehenden Ansprüche, wobei der feste Gegenstand ein 3D-gedruckter fester Gegenstand ist und/oder wobei das Verfahren den Schritt des 3D-Druckens des festen Gegenstandes umfasst.

11. Stoßerregungs-, d. h., IE-, Messvorrichtung zum Messen einer Dichteverteilungsabweichung in einem festen Gegenstand, wobei die Vorrichtung Folgendes umfasst
- eine Gegenstandshalterung zum Halten des festen Gegenstandes an seinem Platz während der IE-Messung,
- eine Stoßeinrichtung zum Bereitstellen eines Erregungsimpulses für einen festen Gegenstand, vorzugsweise eine mechanische Stoßeinrichtung zum Bereitstellen eines mechanischen Stoßes für den festen Gegenstand,
- einen Sensor zum Erhalten einer Schwingungsreaktion des festen Gegenstandes auf den Erregungsimpuls,
- Verarbeitungsmittel, die zu Folgendem konfiguriert sind:
• Ableiten einer Eigenfrequenz eines ausgewählten Schwingungsmodus aus einer Schwingungsreaktion, die durch den Sensor erhalten wird,
wobei:
i) die Stoßeinrichtung konfiguriert ist zum Bereitstellen eines ersten Erregungsimpulses für den festen Gegenstand, vorzugsweise eines mechanischen Stoßes,
ii) der Sensor konfiguriert ist zum Erhalten einer ersten Schwingungsreaktion des festen Gegenstandes auf den ersten Erregungsimpuls und die Verarbeitungsmittel konfiguriert sind zum Ableiten einer ersten Eigenfrequenz eines Schwingungsmodus in einer ersten Ausrichtung aus der Schwingungsreaktion,
iii) die Stoßeinrichtung konfiguriert ist zum Bereitstellen eines zweiten Erregungsimpulses für den festen Gegenstand, vorzugsweise eines mechanischen Stoßes,
iv) der Sensor konfiguriert ist zum Erhalten einer zweiten Schwingungsreaktion des festen Gegenstandes auf den zweiten Erregungsimpuls und die Verarbeitungsmittel konfiguriert sind zum Ableiten einer zweiten Eigenfrequenz des Schwingungsmodus in einer zweiten Ausrichtung aus der zweiten Schwingungsreaktion,
wobei die Gegenstandshalterung dafür konfiguriert ist, den Gegenstand im Verhältnis zu der Stoßeinrichtung zu drehen und/oder zu verschieben, und/oder die Stoßeinrichtung dafür konfiguriert ist, sich im Verhältnis zu der Gegenstandshalterung zu drehen und/oder zu verschieben, zwischen den Schritten b und c, so dass der erste Erregungsimpuls für den festen Gegenstand bei einer ersten Position bereitgestellt wird und der zweite Erregungsimpuls für den festen Gegenstand bei einer zweiten Position, die sich von der ersten Position unterscheidet, derart bereitgestellt wird, dass sich die erste Ausrichtung von der zweiten Ausrichtung unterscheidet, und
wobei die Verarbeitungsmittel ferner konfiguriert sind zum Vergleichen der ersten Eigenfrequenz mit der zweiten Eigenfrequenz, wodurch ein Maß der Dichteverteilungsabweichung in dem festen Gegenstand erhalten wird.

12. Vorrichtung nach Anspruch 11, wobei die Stoßeinrichtung zum Verleihen eines Erregungsimpulses an einen festen Gegenstand während einer Stoßerregungsmessung Folgendes umfasst:
- einen länglichen elastischen biegsamen Arm, der um eine Biegungsrichtung elastisch verformbar ist, wobei der biegsame Arm ein proximales Längsende und ein distales Längsende umfasst,
- eine Hammerspitze zum mechanischen Bereitstellen eines Erregungsimpulses für den festen Gegenstand, wobei die Hammerspitze an dem distalen Ende des Arms befestigt ist, und
- einen programmierbaren Stellantrieb, der an dem proximalen Längsende des Arms befestigt ist,
wobei der Stellantrieb dafür programmiert ist, eine Winkelgeschwindigkeit für das proximale Längsende des Arms bereitzustellen durch Drehen des proximalen Längsendes um eine Stellantriebsachse, die im Wesentlichen parallel zu der Biegungsrichtung des Arms ist.

13. Vorrichtung nach Anspruch 12, wobei die Winkelgeschwindigkeit einem vordefinierten Winkelgeschwindigkeitsprofil folgt, wobei das Winkelgeschwindigkeitsprofil dafür konfiguriert ist, einen Impulsstoß für den festen Gegenstand bereitzustellen.

14. Vorrichtung nach einem der Ansprüche 11 bis 13, wobei der Sensor ein Mikrofon, einen piezoelektrischen Verschiebungssensor und/oder ein Laserinterferometer umfasst, um die Schwingungsreaktion zu erfassen.

15. Vorrichtung nach einem der Ansprüche 11 bis 14, wobei der Sensor eine Verarbeitungseinheit und/oder eine Speichereinheit zum Aufzeichnen und/oder Analysieren der Schwingungsreaktion umfasst.

## Revendications

1. Procédé non destructif de mesure d'un écart de distribution de densité dans un objet solide, comprenant les étapes consistant à :
a) fournir une première impulsion d'excitation à l'objet solide, de préférence un impact mécanique ;
b) obtenir une première réponse vibratoire de l'objet solide à la première impulsion d'excitation, et dériver une première fréquence propre d'un mode vibratoire selon une première orientation à partir de ladite première réponse vibratoire ;
c) fournir une deuxième impulsion d'excitation à l'objet solide, de préférence un impact mécanique ;
d) obtenir une deuxième réponse vibratoire de l'objet solide à la deuxième impulsion d'excitation, et dériver une deuxième fréquence propre dudit mode vibratoire selon une deuxième orientation à partir de ladite deuxième réponse vibratoire,
par lequel la première impulsion d'excitation est fournie à l'objet solide au niveau d'une première position et la deuxième impulsion d'excitation est fournie à l'objet solide au niveau d'une deuxième position qui est différente de la première position de telle sorte que la première orientation est différente de la deuxième orientation, et
par lequel le procédé comprend en outre l'étape consistant à :
e) comparer la première fréquence propre à la deuxième fréquence propre, obtenant de ce fait une mesure de l'écart de distribution de densité dans ledit objet solide.

2. Procédé selon la revendication 1, comprenant la répétition des étapes consistant à :
c') fournir une i-ème impulsion d'excitation à l'objet solide, de préférence un impact mécanique ; et
d') obtenir une i-ème réponse vibratoire de l'objet solide à la i-ème impulsion d'excitation, et dériver une i-ème fréquence propre dudit mode vibratoire selon une i-ème orientation à partir de ladite i-ème réponse vibratoire,
par lequel la i-ème impulsion d'excitation est fournie à l'objet solide au niveau d'une i-ème position différente de la première position, de la deuxième position et de la j-ème position de telle sorte que la i-ème orientation est différente de la première orientation, de la deuxième orientation et de la j-ème orientation, dans lequel j < i, par lequel i vaut au moins 3, tel que 3, 4, 5, 6, 7, 8, 9, 10 ou plus,
le procédé comprenant en outre la répétition de l'étape consistant à :
e') comparer la i-ème fréquence à la première fréquence propre, à la deuxième fréquence propre et/ou à la j-ème fréquence, où j < i, obtenant de ce fait une mesure de l'écart de distribution de densité dans ledit objet solide.

3. Procédé selon l'une quelconque des revendications 1 ou 2, par lequel l'objet solide comprend substantiellement une symétrie géométrique et par lequel l'écart de distribution de densité est substantiellement une asymétrie de densité,
par lequel la première position et la deuxième position sont substantiellement liées par la symétrie géométrique de l'objet solide, et
par lequel l'étape e) comprend le calcul de la différence entre la première fréquence propre et la deuxième fréquence propre pour obtenir ladite mesure de l'asymétrie de densité.

4. Procédé selon la revendication 3, dans lequel les étapes c', d' et e' sont exécutées un nombre n de fois, dans lequel n est choisi sur la base de la symétrie géométrique substantielle de l'objet solide.

5. Procédé selon l'une quelconque des revendications 3 ou 4, lorsqu'elle dépend de la revendication 2, par lequel la i-ème position est liée par la symétrie géométrique de l'objet solide à la première position, à la deuxième position et à la j-ème position, dans lequel j < i.

6. Procédé selon l'une quelconque des revendications 1 à 5, par lequel l'étape e) comprend le calcul de la différence entre la première fréquence propre et la deuxième fréquence propre et la comparaison de ladite différence à une valeur de différence de fréquence propre de référence pour obtenir ladite mesure de l'écart de distribution de densité, ou procédé selon la revendication 2, par lequel l'étape e') comprend le calcul d'un ensemble des différences entre la i-ème fréquence propre et la j-ème fréquence propre, dans lequel j < i, et la comparaison desdites différences à des valeurs de différence de fréquence propre de référence pour obtenir ladite mesure de l'écart de distribution de densité.

7. Procédé selon l'une quelconque des revendications précédentes, dans lequel le mode vibratoire est un mode d'étirement longitudinal, un mode de flexion ou un mode de torsion.

8. Procédé selon l'une quelconque des revendications précédentes, dans lequel le mode vibratoire est un mode harmonique de premier ordre ou un mode harmonique de second ordre.

9. Procédé selon l'une quelconque des revendications précédentes, dans lequel l'objet solide comprend l'un quelconque ou une quelconque combinaison des éléments suivants :
- un métal ou un alliage, de préférence dans lequel le métal peut comprendre du fer, de l'aluminium, du zinc, du cuivre, de l'acier, etc.
- un plastique, tel qu'un matériau polymère
- un matériau d'impression 3D, de préférence :
• un métal tel que du titane ou de l'acier inoxydable,
• une céramique telle que l'oxyde d'aluminium, ou
• un polymère tel que du polyétheréthercétone, c'est-à-dire du PEEK, ou du polyétherimide tel que de l'ULTEM^{™}
- un matériau composite, tel qu'un composite de plastique et de métal.

10. Procédé selon l'une quelconque des revendications précédentes, dans lequel l'objet solide est un objet solide imprimé en 3D et/ou par lequel le procédé comprend l'étape d'impression 3D de l'objet solide.

11. Appareil de mesure par excitation par impact, c'est-à-dire EI, pour mesurer un écart de distribution de densité dans un objet solide, comprenant :
- un support d'objet pour supporter l'objet solide en place pendant la mesure par EI ;
- un dispositif d'impact pour fournir une impulsion d'excitation à un objet solide, de préférence un dispositif d'impact mécanique pour fournir un impact mécanique à l'objet solide ;
- un capteur pour obtenir une réponse vibratoire de l'objet solide à l'impulsion d'excitation ;
- des moyens de traitement configurés pour :
• dériver une fréquence propre d'un mode vibratoire sélectionné à partir d'une réponse vibratoire obtenue par le capteur,
par lequel :
i) le dispositif d'impact est configuré pour fournir une première impulsion d'excitation à l'objet solide, de préférence un impact mécanique ;
ii) le capteur est configuré pour obtenir une première réponse vibratoire de l'objet solide à la première impulsion d'excitation, et les moyens de traitement sont configurés pour dériver une première fréquence propre d'un mode vibratoire selon une première orientation à partir de ladite réponse vibratoire ;
iii) le dispositif d'impact est configuré pour fournir une deuxième impulsion d'excitation à l'objet solide, de préférence un impact mécanique ;
iv) le capteur est configuré pour obtenir une deuxième réponse vibratoire de l'objet solide à la deuxième impulsion d'excitation, et les moyens de traitement sont configurés pour dériver une deuxième fréquence propre dudit mode vibratoire selon une deuxième orientation à partir de ladite deuxième réponse vibratoire,
par lequel le support d'objet est configuré pour faire tourner et/ou déplacer l'objet par rapport au dispositif d'impact et/ou le dispositif d'impact est configuré pour tourner et/ou se déplacer par rapport au support d'objet entre les étapes b et c, de telle sorte que la première impulsion d'excitation est fournie à l'objet solide au niveau d'une première position et la deuxième impulsion d'excitation est fournie à l'objet solide au niveau d'une deuxième position différente de la première position de telle sorte que la première orientation est différente de la deuxième orientation, et
par lequel les moyens de traitement sont en outre configurés pour comparer la première fréquence propre à la deuxième fréquence propre, obtenant de ce fait une mesure de l'écart de distribution de densité dans ledit objet solide.

12. Appareil selon la revendication 11, dans lequel le dispositif d'impact pour communiquer un impact impulsionnel à un objet solide pendant une mesure par excitation par impact comprend :
- un bras élastique allongé et flexible qui peut être déformé de façon élastique autour d'une direction de flexion, le bras flexible comprenant une extrémité longitudinale proximale et une extrémité longitudinale distale ;
- une pointe de marteau pour fournir mécaniquement une impulsion d'excitation à l'objet solide, la pointe de marteau étant fixée à l'extrémité distale du bras, et
- un actionneur programmable fixé à l'extrémité longitudinale proximale du bras,
par lequel l'actionneur est programmé pour fournir une vitesse angulaire à l'extrémité longitudinale proximale du bras en faisant tourner ladite extrémité longitudinale proximale autour d'un axe d'actionneur qui est sensiblement parallèle à la direction de flexion du bras.

13. Appareil selon la revendication 12, dans lequel la vitesse angulaire suit un profil de vitesse angulaire prédéfini, par lequel ledit profil de vitesse angulaire est configuré pour fournir un impact impulsionnel à l'objet solide.

14. Appareil selon l'une quelconque des revendications 11 à 13, dans lequel le capteur comprend un microphone, un capteur de déplacement piézoélectrique et/ou un interféromètre laser pour capturer la réponse vibratoire.

15. Appareil selon l'une quelconque des revendications 11 à 14, dans lequel le capteur comprend une unité de traitement et/ou une unité de mémoire pour enregistrer et/ou analyser la réponse vibratoire.
